# EUROPEAN PATENT SPECIFICATION

(11) **EP 3 062 999 B1**
(45) Date of publication and mention of the grant of the patent: **15.04.2020**
(21) Application number: 14806431.4
(22) Date of filing: 23.10.2014
(51) Int. Cl.: B29D 99/00, B29C 33/52, B29C 70/30, B64C 1/08, B29L 31/30, B64C 1/00, B64C 1/06

(54) **METHOD FOR MANUFACTURING HOLLOW REINFORCEMENT STRUCTURES INTERSECTING ONE ANOTHER**
VERFAHREN ZUR HERSTELLUNG VON HOHLEN, EINANDER ÜBERSCHNEIDENDEN VERSTÄRKUNGSSTRUKTUREN
PROCÉDÉ POUR LA FABRICATION DE STRUCTURES DE RENFORT CREUSES SE CROISANT

(30) Priority: 29.10.2013 IT TO20130871
(43) Date of publication of application: 07.09.2016
(73) Proprietor: Leonardo S.p.A., 00195 Roma (IT)
(72) Inventor: BOTTERO, Luca, I-21057 Olgiate Olona (VA) (IT); GREGORI, Massimo, I-21054 Fagnano Olona (VA) (IT)
(74) Representative: Vitillo, Giuseppe
(86) International application number: PCT/IB2014/065563
(87) International publication number: WO 2015/063657

(56) References cited:
- US-A1- 2004 070 108
- US-A1- 2009 246 531
- US-A1- 2011 308 711

## Description

The present invention relates to a method to manufacture reinforcement structures, for example designed to stiffen a panel or a structure, preferably in the aeronautical field. Reinforcement structures according to the present invention are made of a composite material and are hollow on the inside. Reinforcement structures according to the present invention are especially suitable for panels or aerostructures, which are made of a composite material, as well. The method according to the present invention allows the manufacturing of structures intersecting one another, so as to obtain desired stiffness features in said panel or aerostructure.

Panels or structures in general in the aeronautical field require a high structural efficiency. The need to reduce weights and, at the same time, ensure high-quality mechanical features of the panels or aerostructures over the course of time has led to the development and use of materials and configurations that are more and more optimized.

Sandwich panels are known, which comprise two thin outer laminate face sheets, which are made of a composite material and are spaced apart by a core made of light material, such as for example honeycomb structures or foam materials, etc..

Aerostructures can typically be represented as an assembly of skins or laminates made of a composite material. The use of composite materials to manufacture panels allows constructors to obtain high performances, especially to bear the loads to which the panels are subject.

Furthermore, panels or structures are known, which are made of a composite material and do not use an intermediate layer made of a light material. The necessary stiffness for this type of panel or aerostructure is obtained by means of local and discrete reinforcements. These reinforcements are made of a composite material consisting of skins and stiffeners obtained by means of a polymerization process, in particular co-curing or simultaneous polymerization process, to which the composite material of all the components that are part of the panel or structure are subject. This has brought to the attention of constructors some hard limits of the technology available for manufacturing these reinforcements. Reinforcements are normally arranged along one single direction, namely longitudinal or transverse, for example relative to a plane defined by the panel or aerostructure.

Reinforcements are known, which are manufactured by means of hollow structures made of a composite material.

Document US 2004/0070108 discloses a method of manufacturing a single piece co-cured fuselage incorporating a plurality of stiffeners. Document US 2011/0308711 discloses a method for forming a hollow, complex, monolithic composite part.

The processes carried out to manufacture these hollow structures use lamination mandrels. These mandrels are arranged on the panel or structure so as to be covered by laminates, normally made of carbon, which determine the stiffness of the panel or structure. After the polymerization step performed to stiffen the hollow structure, the mandrel must be removed.

Normally, the methods used to manufacture hollow reinforcement structures comprise the step of manufacturing said hollow structures along directions that are parallel to one another.

Reinforcement or stiffening structures intersecting one another can be manufactured with a method in which, during a first step, the hollow structures arranged along a particular direction are manufactured and then cured or polymerized; after the first step, hollow structures normally arranged in a direction that is perpendicular to the first one are manufactured and, subsequently, a second polymerization step is performed, during which the structures are cured so as to stiffen the new hollow structures.

The manufacturing method implemented by the prior art can scarcely be automated due to the impossibility to simultaneously manufacture hollow reinforcement or stiffening structures along directions that are different form one another, in particular converging and/or intersecting.

Said hollow structures have a cross section that can have a different shape depending on the shape of the mandrel.

The shape of the mandrel itself can increase or reduce the possibility to manufacture hollow reinforcement or stiffening structures intersecting one another. It is widely known that the intersection of hollow reinforcement or stiffening structures with a trapezoidal or "Ω"-shaped cross section turns out to very hard to manufacture, since it requires a further manufacturing effort, for example to laminate intersection points. This manufacturing effort leads to an increase in manufacturing costs.

A further technical problem arising from the solutions suggested by the prior art relates to the possibility of removing, for example extracting, the mandrel after the hollow structure has been manufactured, in particular after the polymerization step. The presence of hollow reinforcement or stiffening structures manufactured after other hollow structures, for example reinforcement or stiffening structures, have been manufactured makes it difficult for the mandrel to be extracted following the polymerization step.

The object of the present invention is to solve the problems mentioned above by implementing a new method to manufacture hollow reinforcement or stiffening structures that are not parallel to one another and intersect one another.

One aspect of the present invention relates to a method to manufacture hollow reinforcement or stiffening structures having the features set forth in appended claim 1.

Further accessory features are set forth in the appended dependent claims.

A further aspect of the present invention relates to a panel according to claim 8, on which hollow reinforcement structures are manufactured.

The features and advantages of the method to manufacture hollow reinforcement or stiffening structures will be best understood upon perusal of the following detailed description with reference to the accompanying drawings, which show what follows:
- figures 1A and 1B show a panel or aerostructure on which hollow reinforcement structures can be manufactured; in particular, figure 1A shows only the panel in a specific embodiment that is not flat, but curved, without reinforcement structures, whereas figure 1B shows the panel of figure 1A with reinforcement structures, which, by way of example, are arranged so as to be perpendicular to one another;
- figure 2 shows a detail of a point of intersection of two hollow reinforcement structures that are arranged perpendicular to one another and shown in figure 1B;

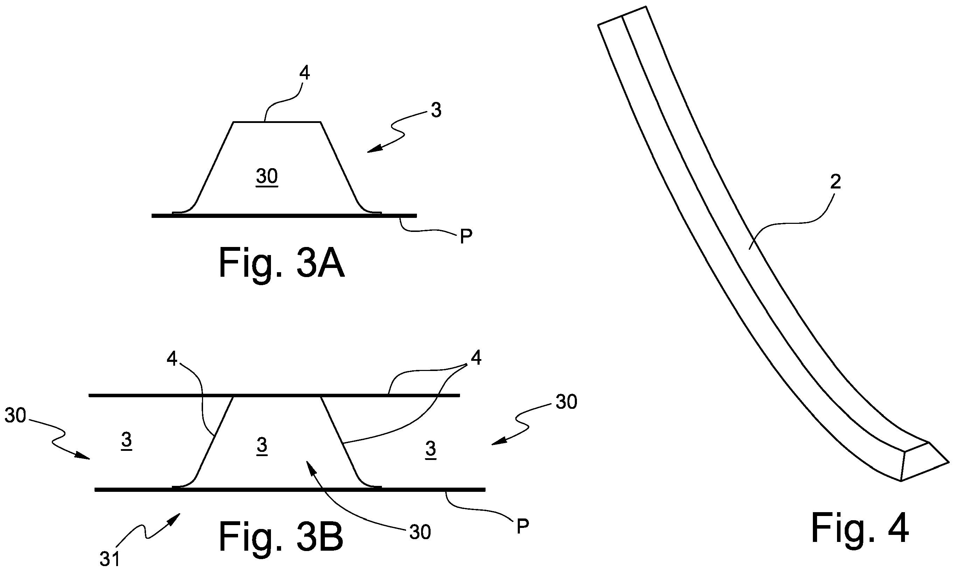

- figures 3A and 3B show cross sections of the panel comprising hollow reinforcement structures; in particular, figures 3A shows a hollow reinforcement structure and figure 3B shows a point of intersection between two hollow reinforcement structures;
- figure 4 shows an embodiment of the mandrel used in the method according to the present invention;
- figures 5A and 5B show a view from above of different panel embodiments, for example flat panels in which the reinforcement structures intersect one another at different angles.

With reference to the figures mentioned above, the method to manufacture a plurality of hollow reinforcement structures 3 for panels "P" or aerostructures comprises the following, preferably consecutive, steps:
a) positioning one mandrel 2 on the surface of a panel "P" in correspondence to each hollow structure 3 to be manufactured;
b) laminating at least one composite material layer 4 on top of mandrel 2;
c) polymerizing said panel "P" on which said at least one composite material layer 4 is applied;
d) removing said mandrel 2 from the hollow structures 3.

The arrangement and/or shape of said mandrel 2 is such that at least two of said hollow reinforcement structures 3 are not parallel to one another and are intersecting.

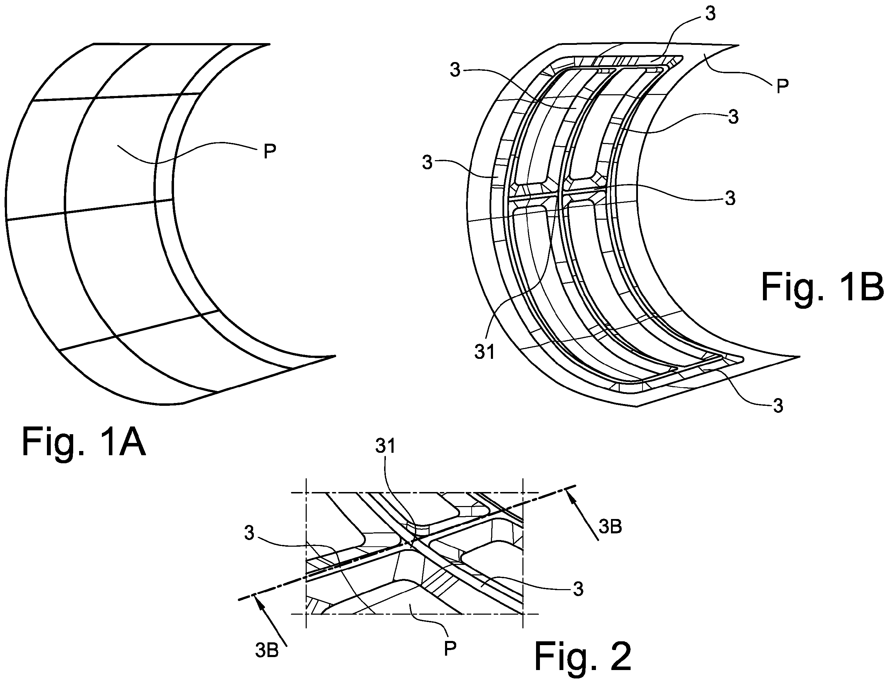

For the purpose of the present invention, the term panel "P" means a structure or aerostructure, for example the skin, under the hollow structures 3 according to the present invention. Said panel "P" is an element on itself, on which the hollow structures 3 according to the present invention are manufactured. Figure 1A shows an explanatory embodiment of panel "P".

The intersection of at least two hollow reinforcement structures 3 defines an intersection point 31.

In an explanatory and non-limiting embodiment, at least two hollow structures 3 intersect one another in a perpendicular manner, as shown by way of example in figure 1B.

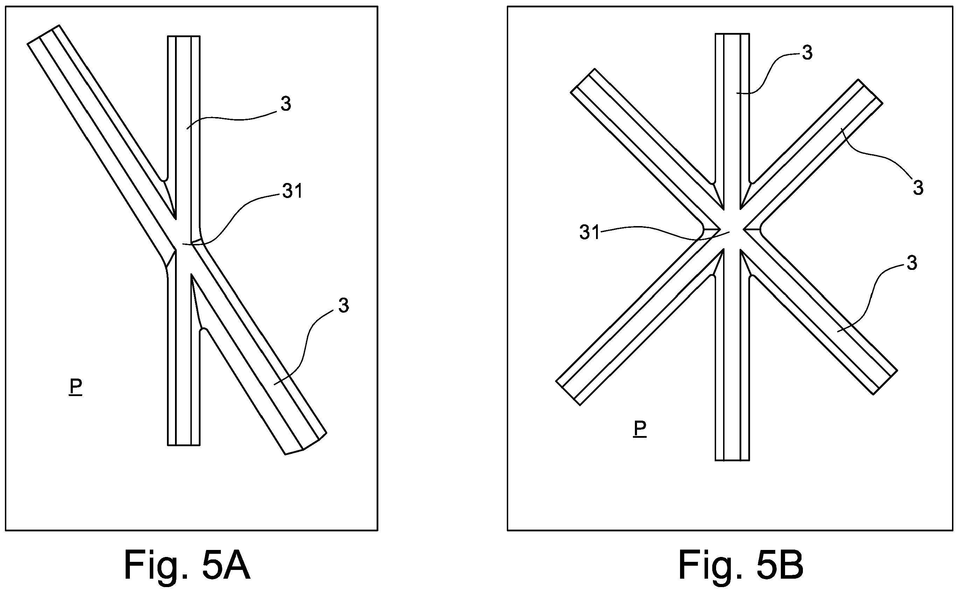

Figures 5A and 5B show equivalent embodiments of reinforcement structures 3, in which two or more structures 3 intersect one another in intersection point 31 in a non perpendicular manner. In particular, said hollow structures 3 have different intersection angles. The selection of the angle of intersection between two or more hollow structures 3 depends on the reinforcement and stiffening conditions requested for specific panel "P" or aerostructure.

Panel "P" or aerostructure normally comprises an outer surface, which is substantially visible when the panel or aerostructure is positioned, for example, on an aircraft or a portion thereof; and an inner surface, which is not visible when said panel or aerostructure is positioned, for example, on an aircraft or a portion thereof. Panel "P" can be associated with a plurality of hollow reinforcement structures 3 according to the present invention.

Panel "P" or aerostructure can be flat, as shown for example in figures 5A and 5B, or curved, as shown for example in figures 1A and 1B.

To manufacture the hollow structures 3 intersecting one another on said panel "P", the method according to the present invention comprises a single step b) of polymerizing said panel "P", to polymerize all the hollow reinforcement or stiffening structures 3, preferably for all the hollow structures 3 arranged on each panel "P" or aerostructure.

The hollow structures 3 manufactured on a panel "P" are manufactured by means of single mandrel 2, which is shaped so as to manufacture more than one hollow structures 3 intersecting one another. Mandrel 2 is shaped so as to create more than one hollow structures 3, for example all the hollow structures 3 that have to be manufactured on said single panel "P" or aerostructure. Figure 1B shows a panel on which there are manufactured hollow reinforcement structures 3 intersecting one another, in particular three hollow structures arranged horizontally and three hollow structures arranged vertically, the latter hollow structures being arranged so as to be perpendicular to the former three hollow structures. The hollow structures 3, shown for example in figures 1B, 5A and 5B, are manufactured by means of a single mandrel 2.

Furthermore, mandrel 2 determines the shape of the cross section of the hollow structure 3.

The hollow structures 3 have a cross section defining an opening 30.

The cross section of mandrel 2 allows the hollow structure 3 to be manufactured with an opening 30 having the desired shape.

In an explanatory and non-limiting embodiment, the cross section of said hollow structure 3 defines an opening with a trapezoidal shape. In order to manufacture hollow structures 3 with a trapezoidal opening 30, a mandrel 2 is used, which has a cross section with a substantially trapezoidal shape, as well.

In general, the section of the hollow structure 3 that defines opening 30 has a shape depending on the shape of the mandrel used. One can use mandrels 2 with a circular section or with a polygonal section.

If one examines more in detail the steps to be performed to manufacture the hollow structure 3, the step a) of positioning one mandrel 2 on the surface of a panel "P" precisely consists in positioning one mandrel 2 on the surface of a panel "P".

Preferably, said mandrel 2 is positioned on the surface of the inner face of panel "P" or aerostructure.

Said mandrel 2 is positioned on the panel "P" in the point where the hollow structures 3 having an opening 30 have to be manufactured. In particular, said mandrel 2 is positioned in the points where the panel "P" or aerostructure needs a structural reinforcement.

After said mandrel 2 has been positioned in the positions in which the hollow structure 3 has to be manufactured, one can move on to the following step b) of laminating at least one composite material layer 4 on top of each mandrel 2.

The composite material layer is laid on top of mandrel 2, also in contact with panel "P", and is laminated so as to obtain a surface that is as linear as possible.

The lamination continues until the desired thickness is reached and/or mandrel 2 used to manufacture the hollow structures 3 is covered.

For the purpose of the present description, the term "linear surface" means a surface, even a curved one, which does not have undesired wrinkles.

At the end of the lamination, a panel is obtained, which contains an adjusted mandrel that guides its geometries.

After having positioned one or more composite material layers 4, so as to cover said mandrel 2 and panel "P" where a reinforcement of the panel itself is needed, one can move on to the following step c) of polymerizing said panel "P".

The polymerization takes place by means of a curing process, for example by heating panel "P" where said at least one composite material layer 4 has been laid.

More preferably, the polymerization step c) is performed by means of a co-curing process, preferably in autoclave.

Panel "P" or aerostructure is preferably polymerized by means of a specific thermobaric cycle of the matrix of the composite material used. Said thermobaric cycle is preferably carried out by using an autoclave, so that said at least one composite material layer 4 correctly adheres to panel "P" and stiffens.

If necessary, during said step c), mandrel 2 can expand before the heating stiffens the composite material layer 4, so as to widen the size of opening 30 of the hollow structure 3, anyway maintaining the dimensions indicated in the manufacturing data sheets. The possible expansion of mandrel 2 is limited by the stiffening of the laminated composite material layers 4, thus determining the dimensions of openings 30 of the hollow structures 3.

Advantageously, a subsequent intermediate cooling step is provided, which takes place after the polymerization step c) and causes the shrinkage of said mandrel 2.

At the end of the polymerization step c) one can move on to the step d) of removing said mandrel 2 from the hollow structures 3.

The method according to the present invention uses mandrels 2 that are water-soluble. These water-soluble mandrels are able not to undergo structural variations during the polymerization step. Said mandrels 2, for example, are made of an inert material, preferably a powder with a water-soluble binder. Irrespective of the technical features mentioned above, the use of said mandrel 2 made of a water-soluble material helps implement the method to manufacture hollow structures intersecting one another, by means of a single polymerization step b), preferably for all the hollow structures 3 intersecting one another.

Prior to the step d) of removing mandrel 2, there is a further step d0) of perforating the hollow reinforcement structure 3. With said perforation step d0) one can manufacture an opening that is such as to allow mandrel 2 to be removed or extracted in case there is no outlet hole.

The use of water-soluble mandrels 2 allows constructors to manufacture holes with a diameter that is much smaller than the initial diameter of mandrel 2. Through these holes in the hollow structure 3 the dissolved mandrel can be removed, for example poured and/or spilled in suitable storing containers.

After the removal step d), the method comprises a further step in which panel "P" or aerostructure is properly trimmed. After the trimming step, the panel is provided with gaskets, so as to allow panel "P" or aerostructure to be positioned, for example on an aircraft.

The present method to manufacture hollow reinforcement structures 3 is stable to be carried out and, furthermore, is particularly simple, since it does not require the use of further devices compared to the method implemented in the prior art.

The method to manufacture hollow structures 3 intersecting one another can be implemented with any type of panel "P" or aerostructure provided with any shape, both flat and curved, for example comprising inflexion points or saddle points.

Furthermore, the method according to the present invention allows manufacturers to reduce production costs, as all the hollow structures are manufactured in one single step, thus reducing the lamination and polymerization steps and eliminating the cleaning of the hollow structure 3 and the removal of the mandrel.

In detail, the method according to the present invention is able to manufacture all the hollow reinforcement structures 3 of a panel "P" by performing one single lamination step b) and one single polymerization step c).

The method according to the present invention can be implemented in an automatic manner by means of automatic systems. For example, by means of systems used to position said mandrel 2 on panel "P" and by means of automatic systems to lay and laminate composite material layers 4.

The method can be largely automated thanks to the possibility to manufacture the hollow structures 3 intersecting one another by means of a single step of the process, in particular by means of a single polymerization step c). The method according to the present invention allows all the hollow structures 3 that have to be manufactured on a panel "P" or aerostructure to be manufactured in one single manufacturing step, without the repetition of steps of the method.

The automation of the method, for example, is implemented by means of an automated fiber placement system, also called AFP system, to place composite materials on a lamination mold. On said lamination mold there is installed one water-soluble mandrel.

Said mandrel 2 is dedicated, as it has geometries and consistencies that are such as to allow composite material layers 4 to be laid on it in an automated manner. The automatic lamination of layers 4 continues until a predetermined thickness is reached and/or all the mandrels available are covered.

At the end of the lamination, a panel is obtained, which contains an adjusted mandrel guiding its geometries and is ready for the single cycle in autoclave.

After the simultaneous polymerization of all the hollow structures 3 available on panel "P" or aerostructure, the panel is perforated by means of a machine tool and the mandrel is removed. The removal of mandrel 2 takes place through its dissolution.

Again, panel "P" or aerostructure is properly trimmed and the gaskets are applied, so as to allow panel "P" or aerostructure to be positioned, for example on an aircraft.

Furthermore, the use of water-soluble mandrels 2 to manufacture the hollow structures 3 allows mandrels 2 to be manufactured in the desired shapes. The use of prior art mandrels to manufacture intersecting hollow structures 3 would lead to the impossibility for operators to remove the mandrels from the hollow structures in an easy manner.

The method according to the present invention is particularly suitable for the production of hollow reinforcement structures for panels for aircrafts.

This integrated reinforcement geometry can also be used in panels for nacelles or panels for aircraft that require stiffening.

The method according to the present invention allows constructors to manufacture stiffened panels in a particularly efficient manner. In particular, the configuration described in this document was conceived to fulfill the needs of the aeronautical field.

**NUMERICAL REFERENCES:**

| Panel | P |
|---|---|
| Mandrel | 2 |
| Hollow structure | 3 |
| Opening | 30 |
| Intersection point | 31 |
| Composite material layer | 4 |

## Claims

1. Method to manufacture panels or aerostructures (P) associated with a plurality of hollow reinforcement structures (3) in which at least two of said hollow reinforcement structures (3) intersect one another; the method comprises the following consecutive steps:
a) positioning a single mandrel (2), shaped so as to manufacture hollow structures (3) that intersect one another, on the surface of a panel (P) in correspondence to the hollow structures (3) to be manufactured;
b) laminating at least one composite material layer (4) on top of the mandrel (2);
c) polymerizing said panel (P) on which said at least one composite material layer (4) is applied, in a single step of polymerization for all the hollow reinforcement structures (3);
d) removing said mandrel (2) from the hollow structures (3) through dissolution, being said mandrel water-soluble.

2. Method according to claim 1, wherein, prior to the step d) of removing the mandrel (2), there is a step d0) of perforating the hollow reinforcement structure (3).

3. Method according to claim 1, wherein a single lamination step b) is provided.

4. Method according to claim 1, wherein the method is implemented in an automatic manner by means of automatic systems.

5. Method according to claim 1, wherein the polymerization step is performed by means of a co-curing process in autoclave.

6. Method according to claim 1, wherein the hollow structures (3) have a cross section that defines an opening (30) with a shape that depends on the shape of the mandrel (2) used.

7. Method according to claim 2, wherein a subsequent intermediate cooling step is provided, which takes place after the polymerization step c) and causes the shrinkage of said mandrel (2).

8. Panel or aerostructure (P) comprising:
- an outer surface, which is visible when the panel or aerostructure is positioned, for example, on an aircraft; and
- an inner surface, which is not visible when said panel or aerostructure is positioned, for example, on an aircraft; said panel (P) is associated with a plurality of hollow reinforcement structures (3) in which at least two of said hollow reinforcement structures (3) intersect one another; said hollow reinforcement structures (3) are manufactured according to a method comprising the following consecutive steps:
a) positioning a single mandrel (2), shaped so as to manufacture hollow structures (3) that intersect one another, on the surface of the panel (P) in correspondence to the hollow structures (3) to be manufactured;
b) laminating at least one composite material layer (4) on top of the mandrel (2);
c) polymerizing said panel (P) on which said at least one composite material layer (4) is applied, in a single step of polymerization for all the hollow reinforcement structures (3);
d) removing said mandrel (2) from the hollow structures (3) through dissolution, the mandrel being water-soluble; in which:
• prior to the step of removing mandrel (2), there is a further step d0) of perforating the hollow reinforcement structure (3), in which holes are manufactured with a diameter that is smaller than the initial diameter of the mandrel (2).

## Patentansprüche

1. Verfahren zur Herstellung von Paneelen oder Flugzeugstrukturen (P), die mit einer Vielzahl von hohlen Verstärkungsstrukturen (3) verbunden sind, in denen sich zumindest zwei der genannten hohlen Verstärkungsstrukturen (3) überschneiden; wobei das Verfahren die folgenden aufeinanderfolgenden Schritte umfasst:
a) Positionieren eines einzigen Doms (2), der so geformt ist, dass er Hohlstrukturen (3) erzeugt, die sich überschneiden, auf der Oberfläche einer Platte (P) in Übereinstimmung mit den herzustellenden Hohlstrukturen (3);
b) Laminieren wenigstens einer Verbundmaterialschicht (4) auf dem Dom (2);
c) Polymerisieren des Paneels (P), auf das die zumindest eine Verbundmaterialschicht (4) aufgebracht ist, in einem einzigen Polymerisationsschritt für alle hohlen Verstärkungsstrukturen (3);
d) Entfernen des Doms (2) aus den hohlen Strukturen (3) durch Auflösung, wobei der Dom wasserlöslich ist.

2. Verfahren nach Anspruch 1, wobei vor dem Schritt d) des Entfernens des Doms (2) ein Schritt d0) des Perforierens der hohlen Verstärkungsstruktur (3) durchgeführt wird.

3. Verfahren nach Anspruch 1, wobei ein einzelner Laminierungsschritt b) vorgesehen ist.

4. Verfahren nach Anspruch 1, wobei das Verfahren mittels automatischer Systeme automatisch durchgeführt wird.

5. Verfahren nach Anspruch 1, bei dem der Polymerisationsschritt mittels eines Co-Härtungsprozesses im Autoklaven durchgeführt wird.

6. Verfahren nach Anspruch 1, wobei die Hohlstrukturen (3) einen Querschnitt aufweisen, der eine Öffnung (30) mit einer von der Form des Doms (2) abhängigen Form definiert

7. Verfahren nach Anspruch 2, wobei ein nachfolgender Zwischenkühlungsschritt vorgesehen ist, der nach dem Polymerisationsschritt c) durchgeführt wird und die Schrumpfung des Doms (2) herbeiführt.

8. Paneel oder Flugzeugstruktur (P) umfassend:
- eine Außenfläche, die sichtbar ist, wenn das Panel oder die Flugzeugstruktur z.B. an einem Flugzeug angebracht ist, und
- eine Innenfläche, die nicht sichtbar ist, wenn das Paneel oder die Flugzeugstruktur z.B. in einem Flugzeug positioniert ist; wobei das Paneel (P) mit einer Vielzahl von hohlen Verstärkungsstrukturen (3) versehen ist, in denen sich zumindest zwei der hohlen Verstärkungsstrukturen (3) kreuzen; wobei die hohlen Verstärkungsstrukturen (3) nach einem Verfahren hergestellt werden, das die folgenden aufeinanderfolgenden Schritte umfasst:
a) Positionieren eines einzigen Doms (2), der so geformt ist, dass er sich überschneidende Hohlstrukturen (3) erzeugt, auf der Oberfläche der Platte (P) in Übereinstimmung mit den herzustellenden Hohlstrukturen (3);
b) Laminieren zumindest einer Verbundmaterialschicht (4) auf den Dom (2);
c) Polymerisieren der Platte (P), auf die die zumindest eine Verbundmaterialschicht (4) aufgebracht ist, in einem einzigen Polymerisationsschritt für alle hohlen Verstärkungsstrukturen (3);
d) Entfernen des Doms (2) aus den hohlen Strukturen (3) durch Auflösung, wobei der Dom wasserlöslich ist, indem:
• vor dem Schritt des Entfernens des Doms (2) ein weiterer Schritt d0) des Perforierens der hohlen Verstärkungsstruktur (3) erfolgt, in dem Löcher mit einem Durchmesser erzeugt werden, die kleiner als der anfängliche Durchmesser des Doms (2) sind.

## Revendications

1. Procédé de fabrication de panneaux ou d'aérostructures (P) associé(e)s à une pluralité de structures de renfort creuses (3) dans lequel au moins deux desdites structures de renfort creuses (3) s'entrecroisent ;
le procédé comprend les étapes consécutives suivantes :
a) positionnement d'un unique mandrin (2), formé de manière à fabriquer des structures creuses (3) qui s'entrecroisent, à la surface d'un panneau (P) en correspondance des structures creuses (3) à fabriquer ;
b) laminage d'au moins une couche de matériau composite (4) au-dessus du mandrin (2) ;
c) polymérisation dudit panneau (P) sur lequel ladite au moins une couche de matériau composite (4) est appliquée, en une seule étape de polymérisation pour toutes les structures de renfort creuses (3) ;
d) retrait dudit mandrin (2) des structures creuses (3) par dissolution, ledit mandrin étant hydrosoluble.

2. Procédé selon la revendication 1, dans lequel, avant l'étape d) de retrait du mandrin (2), il existe une étape d0) de perforation de la structure de renfort creuse (3) .

3. Procédé selon la revendication 1, dans lequel une étape de laminage unique b) est réalisée.

4. Procédé selon la revendication 1, dans lequel le procédé est mis en œuvre d'une manière automatique au moyen de systèmes automatiques.

5. Procédé selon la revendication 1, dans lequel l'étape de polymérisation est réalisée au moyen d'un processus de co-durcissement en autoclave.

6. Procédé selon la revendication 1, dans lequel les structures creuses (3) ont une section transversale qui définit une ouverture (30) avec une forme qui dépend de la forme du mandrin (2) utilisé.

7. Procédé selon la revendication 2, dans lequel une étape de refroidissement intermédiaire subséquence est prévue, qui a lieu après l'étape de polymérisation c) et qui provoque la contraction dudit mandrin (2).

8. Panneau ou aérostructure (P) comprenant :
- une surface externe, qui est visible lorsque le panneau ou l'aérostructure est positionné(e), par exemple, sur un avion ; et
- une surface interne, qui n'est pas visible lorsque ledit panneau ou ladite aérostructure est positionné(e), par exemple, sur un avion ;
ledit panneau (P) est associé à une pluralité de structures de renfort creuses (3) dans laquelle au moins deux desdites structures de renfort creuses (3) s'entrecroisent ;
lesdites structures de renfort creuses (3) sont fabriquées selon un procédé comprenant les étapes consécutives suivantes :
a) positionnement d'un unique mandrin (2), formé de manière à fabriquer des structures creuses (3) qui s'entrecroisent, à la surface d'un panneau (P) en correspondance des structures creuses (3) à fabriquer ;
b) laminage d'au moins une couche de matériau composite (4) au-dessus du mandrin (2) ;
c) polymérisation dudit panneau (P) sur lequel ledit au moins un panneau en matériau composite (4) est appliqué en une seule étape de polymérisation pour toutes les structures de renfort creuses (3) ;
d) retrait dudit mandrin (2) des structures creuses (3) par dissolution, le mandrin étant hydrosoluble.
dans lequel :
avant l'étape de retrait du mandrin (2), il existe une autre étape d0) de perforation de la structure de renfort creuse (3), dans laquelle des trous sont fabriqués avec un diamètre qui est plus petit que le diamètre initial du mandrin (2).
